# FASCICULE DE BREVET EUROPEEN

(11) **EP 3 389 844 B1**
(45) Date de publication et mention de la délivrance du brevet: **27.01.2021**
(21) Numéro de dépôt: 16826109.7
(22) Date de dépôt: 16.12.2016
(51) Int. Cl.: B01J 8/18, B01J 8/00, B01J 8/02

(54) **DISPOSITIF DE REFROIDISSEMENT POUR RÉACTEUR CATALYTIQUE DE MÉTHANATION DE DIOXYDE DE CARBONE**
KÜHLVORRICHTUNG FÜR EINEN KATALYTISCHEN KOHLENDIOXIDMETHANISIERUNGSREAKTOR
COOLING DEVICE FOR CARBON DIOXIDE METHANATION CATALYTIC REACTOR

(30) Priorité: 17.12.2015 FR 1502627
(43) Date de publication de la demande: 24.10.2018
(73) Titulaire: Engie, 92400 Courbevoie (FR)
(72) Inventeur: FORTIN, Stéphane, 59850 Nieppe (FR); KARA, Yilmaz, 95600 Eaubonne (FR); JUGE, Marine, 92100 Boulogne-Billancourt (FR); LACROIX, François-Xavier, 94140 Alfortville (FR)
(74) Mandataire: Cornuejols, Georges
(86) Numéro de dépôt international: PCT/FR2016/053510
(87) Numéro de publication internationale: WO 2017/103525

(56) Documents cités:
- EP-A1- 0 081 948
- EP-A1- 1 800 739
- FR-A5- 2 034 019
- US-A- 2 394 680
- US-A- 4 314 967
- US-A- 4 539 016

## Description

### DOMAINE TECHNIQUE DE L'INVENTION

La présente invention vise un dispositif de refroidissement pour réacteur catalytique de méthanation de dioxyde de carbone. Elle s'applique, notamment, aux réacteurs de méthanation.

### ÉTAT DE LA TECHNIQUE

La réaction de méthanation est une réaction très exothermique qui est réalisée à l'aide de catalyseurs. Le rendement de cette réaction est conditionné par la maîtrise thermique du réacteur et par l'optimisation de la récupération énergétique du réacteur.

On distingue deux types de réacteurs :
- les réacteurs à lit fixe et
- les réacteurs à lit fluidisé.

Les réacteurs à lit fixes sont simples à concevoir et à construire mais lorsqu'ils n'intègrent pas de système de refroidissement interne, la chaleur libérée par les réactions exothermiques entraîne une augmentation de température avec deux conséquences : un déplacement des équilibres chimiques conduisant à une baisse de rendement de conversion et un risque de désactivation du catalyseur par le frittage à haute température de la phase active du catalyseur.

Les réacteurs de méthanation les plus répandus sont à lit catalytique fixe avec des échangeurs de chaleur entre les réacteurs. Cependant, ces systèmes ne permettent pas de maîtriser la température de la réaction au fur et à mesure de son déroulement. Il découle de cet inconvénient la nécessité de disposer plusieurs étages réactionnels en série pour escompter une conversion satisfaisante et donc des coûts très importants.

Dans d'autres systèmes, des réacteurs échangeurs intégrant un refroidissement pour des réacteurs à lit fixe utilisent une configuration de type échangeur tubulaire ou à plaques. Dans ces réacteurs, le catalyseur est disposé dans des tubes verticaux et un fluide caloporteur, tel de l'eau, de l'huile thermique ou de la vapeur d'eau par exemple, est utilisé pour effectuer le refroidissement par l'extérieur des tubes, aussi appelé « côté calandre ». Ces systèmes ont le désavantage d'induire la construction d'une calandre devant résister à des pressions très importantes. Lorsque la taille du réacteur augmente, ou lorsque la réaction nécessite une température plus élevée, le coût de construction de cette calandre augmente fortement, ce qui pénalise l'utilisation de ces systèmes.

Dans d'autres systèmes, un lit fixe est refroidi par des serpentins disposés, soit horizontalement, soit verticalement. Les inconvénients de ces serpentins sont détaillés à la fin de la partie suivante.

Les réacteurs de méthanation à lit fluidisé ont l'avantage d'avoir une température très homogène permettant une bonne maîtrise de la conversion chimique par évacuation de la chaleur produite par les réactions, que l'on ne peut contrôler que si l'on y intègre un système de refroidissement.

Dans le cas des réacteurs de méthanation à lit catalytique fluidisé, il existe des systèmes mettant en œuvre un dispositif de refroidissement intégré utilisant le changement de phase de l'eau pour réguler la température au sein du réacteur. Ces systèmes sont basés sur l'utilisation de serpentins (« coils », en anglais) dans lesquels est introduite l'eau de refroidissement et le changement de phase à lieu dans les serpentins.

Certains systèmes mettent en œuvre des tubes en faisceau (« bundle », en anglais) sans orientation particulière pour refroidir deux réacteurs à lit fluidisé fonctionnant à des pressions différentes.

L'utilisation de serpentins ou de faisceaux pour effectuer un refroidissement par changement de phase pose des problèmes de stratification entre la phase liquide et la phase vapeur:
- lorsque les serpentins ou les faisceaux sont trop peu inclinés vis-à-vis de l'horizontale ou
- lorsque les serpentins ou les faisceaux présentent des boucles en point haut.

Dans les deux cas, cela nuit au bon refroidissement du réacteur, entraîne la désactivation prématurée du catalyseur et peut provoquer un vieillissement précoce du système de refroidissement. Dans ces deux configurations, une manière de limiter le risque de dysfonctionnement du système de refroidissement consiste à intercaler une pompe de circulation dans le dispositif de refroidissement. Cet équipement augmente les coûts d'investissement et d'exploitation du système et pour autant il n'apporte pas la garantie d'un fonctionnement optimum.

On connaît par ailleurs les documents :
- US 4 539 016, publié le 3 septembre 1985,
- EP 0 081 948, publié le 22 juin 1983 et
- US 2 394 680, publié le 12 février 1946.

Le document US 4 539 016 vise le domaine de la méthanation et enseigne un système techniquement de régulation de pression utilisant un principe de refroidissement mettant en œuvre le changement de phase eau - vapeur.

Toutefois, le dispositif enseigné par US 4 539 016 s'applique exclusivement à la méthanation du CO (monoxyde de carbone).

L'enseignement du document US 4 539 016 vise à ajuster et de maintenir constante la température d'un lit catalytique fluidisé de méthanation d'un mélange CO - H2 (dihydrogène). Cependant la description est contradictoire :
- d'un côté ce document déclare que la température du lit fluidisé doit être réglée pour obtenir la conversion maximale en méthane et
- d'un autre côté, cela doit se faire en étant le plus loin possible de la température théorique d'équilibre (1^{ère} colonne, lignes 14 à 19).

Cette contradiction provient du fait que c'est l'atteinte de la température théorique d'équilibre qui permet d'obtenir le meilleur taux de conversion du mélange en méthane.

De plus, ce même document précise (1^{ère} colonne, lignes 25 à 31) que les gaz peuvent donc être portés proches de l'équilibre théorique hétérogène des gaz correspondant à la température sélectionnée.

Dans ce document US 4 539 016, la température du lit fluidisé est réglée en réglant la pression du liquide de refroidissement à une valeur spécifique déterminée et fixe indépendamment de la température à l'intérieur du réacteur de méthanation.

Cette caractéristique présente un inconvénient majeur car, industriellement, le débit et/ou la composition des gaz entrant varient, aussi la quantité de chaleur à évacuer varie. Compte-tenu des lois de transfert thermique, il y a donc variation de la température du lit catalytique malgré la tendance auto-régulante du système de refroidissement par thermosiphon.

En effet si la température du système de refroidissement est constante, pour transférer plus de chaleur, il faut augmenter le gradient de température, ce qui a pour conséquence une augmentation de la température dans le lit fluidisé. Ceci est d'autant plus vrai que la résistance au transfert thermique la plus importante est entre le lit fluidisé et la paroi externe de chaque tube de refroidissement.

Le document EP 0 081 948 décrit un réacteur applicable à différents procédés catalytiques : principalement la synthèse du méthanol, mais il inclut aussi la réaction de méthanation des oxydes de carbone. Ce document enseigne la présence d'un faisceau de refroidissement dans le réacteur, l'utilisation du changement de phase pour refroidir le réacteur et l'utilisation du phénomène de thermosiphon pour assurer la circulation de l'eau de refroidissement.

Le document EP 0 081 948 présente une absence de régulation de la température dans le réacteur notamment lorsque le débit ou les proportions des gaz entrant changent. Cela nuit au procédé en modifiant les équilibres chimiques qui sont très dépendant de la température et donc le taux de conversion, mais aussi en créant des surchauffes du catalyseur qui le désactivent.

Le document US 2 394 680 décrit un procédé comportant un refroidissement sans changement de phase. Le document US 2 394 680 propose d'utiliser différents matériaux en tant que fluide de refroidissement : des métaux fondus, des sels fondus et dans son mode de réalisation préféré, de la vapeur. Cette vapeur rentre dans l'échangeur à l'état saturé et ressort à l'état surchauffé. Cela signifie que, dans le réacteur, il existe un gradient température très important.

### OBJET DE L'INVENTION

La présente invention vise à remédier à tout ou partie de ces inconvénients.

À cet effet, la présente invention vise un dispositif de refroidissement pour réacteur catalytique de méthanation de dioxyde de carbone selon la revendication 1.

L'utilisation de tubes pour réaliser le refroidissement par changement de phase liquide - gaz de l'eau, permet de s'affranchir des phénomènes de stratification entre l'eau et la vapeur que l'on peut rencontrer dans des serpentins « horizontaux », ou des serpentins « verticaux ». La configuration choisie permet une évacuation continue de la vapeur produite et une circulation de l'eau de refroidissement permanente sans utiliser de pompes auxiliaires. La mesure de la température dans le réacteur catalytique permet de réguler la pression de fonctionnement du système de refroidissement et donc sa température, ce qui permet de réguler la température dans le réacteur. Le maintien d'une pression minimale, impose une température minimale dans le système de refroidissement, ce qui empêche la formation de composés toxiques tels que les carbonyles.

Pour éviter le problème rencontré par le document US 4 539 016, la présente invention prévoie la mise en place d'une boucle de régulation qui prend en compte la température réelle dans le lit fluidisé, pour agir le cas échéant sur la pression du système de refroidissement ce qui modifie sa température pour permettre d'augmenter ou de baisser le transfert thermique entre le lit fluidisé et le système de refroidissement, afin de maintenir la température du lit constante et donc à l'optimum de conversion.

Dans des modes de réalisation, le système de régulation est configuré pour commander l'ouverture ou la fermeture de la vanne en fonction d'une différence entre la température captée et une valeur limite déterminée.

Ces modes de réalisation permettent de réguler le dispositif de refroidissement de manière à ce que la température mesurée à l'intérieur augmente ou diminue pour atteindre la valeur limite déterminée.

Dans des modes de réalisation le dispositif objet de la présente invention comporte un capteur de pression à l'intérieur du dispositif de refroidissement, le système de régulation étant configuré pour commander l'ouverture ou la fermeture de la vanne en fonction de la température et de la pression captées.

Ces modes de réalisation permettent de réguler la pression à l'intérieur du dispositif de refroidissement, la vapeur ainsi libérée pouvant être valorisée par un dispositif externe.

Dans des modes de réalisation, au moins un des tubes est rectiligne et traverse le réacteur verticalement, chaque tube rectiligne étant configuré pour que l'eau circulant dans ledit tube soit partiellement vaporisée lors du passage dans le réacteur catalytique.

Ces modes de réalisation permettent de s'affranchir des phénomènes de stratification entre l'eau et la vapeur que l'on peut rencontrer dans des serpentins « horizontaux », ou des serpentins « verticaux ».

Dans des modes de réalisation, le dispositif objet de la présente invention comporte un distributeur d'eau relié à chaque tube.

Ces modes de réalisation permettent de limiter le nombre d'orifices traversant la paroi du réacteur, ces orifices étant mutualisés pour former une entrée d'eau pour le distributeur d'eau.

Dans des modes de réalisation, le dispositif objet de la présente invention comporte un collecteur de vapeur relié à chaque tube.

Ces modes de réalisation permettent de limiter le nombre d'orifices traversant la paroi du réacteur, ces orifices étant mutualisés pour former une sortie d'eau pour le collecteur d'eau.

Ces modes de réalisation permettent de réguler la vitesse de circulation de l'eau dans le dispositif.

Dans la présente invention, au moins une paroi du réacteur est formée par au moins un tube.

De cette façon, la présente invention peut être mise en œuvre dans le cas de réacteurs fonctionnant à une pression proche de la pression atmosphérique.

Dans des modes de réalisation, au moins un tube comporte des ailettes.

Ces modes de réalisation augmentent la surface de contact entre le tube et l'intérieur du réacteur catalytique.

### BRÈVE DESCRIPTION DES FIGURES

D'autres avantages, buts et caractéristiques particulières de l'invention ressortiront de la description non limitative qui suit d'au moins un mode de réalisation particulier du dispositif objet de la présente invention, en regard des dessins annexés, dans lesquels :
- la figure 1 représente, schématiquement et de côté, un premier mode de réalisation particulier du dispositif objet de la présente invention,
- la figure 2 représente, schématiquement et de dessus, un deuxième mode de réalisation particulier du dispositif objet de la présente invention et
- la figure 3 représente, schématiquement et de côté, un troisième mode de réalisation particulier du dispositif objet de la présente invention.

### DESCRIPTION D'EXEMPLES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note dès à présent que les figures ne sont pas à l'échelle.

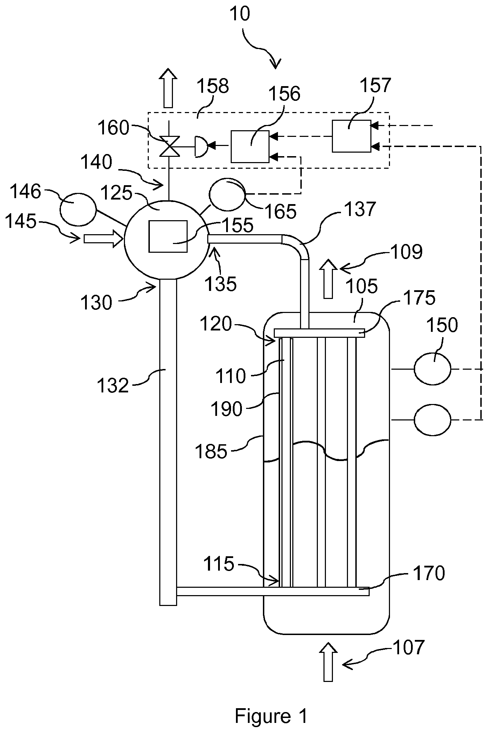

On observe, sur la figure 1, qui n'est pas à l'échelle, une vue en coupe d'un mode de réalisation du dispositif 10 objet de la présente invention. Ce dispositif 10 de refroidissement pour réacteur 105 catalytique de méthanation de dioxyde de carbone comporte :
- au moins un tube 110 de refroidissement traversant le réacteur 105 comportant :
   - une entrée 115 et
   - une sortie 120 positionnée à une altitude plus élevée que l'entrée 115,
- un ballon 125 d'eau alimentant le tube 110 par gravité, comportant :
   - une sortie 130 d'eau, connectée à l'entrée 115 du tube 110 ;
   - une entrée 135 d'eau et de vapeur connectée à la sortie 120 du tube 110 ;
   - une sortie 140 de vapeur et
   - une entrée 145 d'alimentation en eau,
- un moyen 150 de mesure de la température dans le réacteur 105 catalytique et
- un moyen 155 de commande d'un niveau d'eau dans le ballon 125 d'eau configuré pour alimenter le ballon 125 d'eau en eau pour maintenir un niveau d'eau prédéterminé dans le ballon 125.

Le réacteur 105 catalytique présente, par exemple, une forme de cylindre comportant une entrée 107 pour gaz à traiter et une sortie 109 pour gaz traité. Ce réacteur 105 est par exemple configuré pour réaliser une réaction de méthanation.

Ce réacteur 105 catalytique est préférentiellement un réacteur à lit fluidisé.

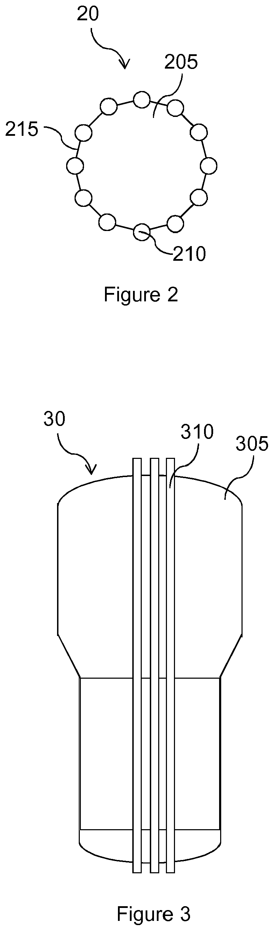

Dans des variantes, telles que celle représentée en figure 3, le réacteur 305 comporte deux parties. Une première partie est configurée pour recevoir un lit fluidisé et présente un diamètre moindre par rapport à la deuxième partie plus large. La première partie correspond à une zone d'expansion du lit fluidisé tandis que la deuxième partie correspond à une zone de désengagement.

Ce réacteur 105, ou 305, est traversé par au moins un tube 110, ou 310 respectivement. Chaque tube 110, ou 310, est, par exemple, une conduite dont une paroi est conductrice de chaleur. Un côté de la paroi est positionné au contact de l'intérieur du réacteur 105, ou 305, tandis que l'autre côté de la paroi est positionné au contact d'eau ou de vapeur d'eau, ou d'un mélange eau liquide et vapeur d'eau, circulant dans le tube 110, ou 310, en fonction du fonctionnement du dispositif 10.

Lorsque le dispositif 10 est en fonctionnement, une partie de l'eau contenue dans le tube 110 est transformée en vapeur par échange thermique entre le réacteur 105 et la paroi du tube 110 puis entre la paroi du tube 110 et l'eau contenue dans le tube 110. Cette vapeur se déplace en altitude vers le haut du tube 110 avec l'eau contenue dans le tube 110.

L'eau pénètre dans le tube 110 par une entrée 115 d'eau, cette entrée 115 d'eau étant par exemple un orifice du tube 110 relié à une conduite d'alimentation en eau.

L'eau sort du tube 110 par une sortie 120, cette sortie 120 étant par exemple un orifice du tube 110 relié à une conduite d'évacuation d'eau et/ou de vapeur d'eau.

Chaque tube 110 de refroidissement est préférentiellement vertical ou proche de la verticalité sans coudes à 180°. Préférentiellement, seule l'alimentation en eau de chaque tube 110 et la collecte du mélange eau - vapeur sortant de chaque tube 110 sont réalisées avec des tubes, 170 et 175, non verticaux.

Le dispositif 10 comporte, de plus, un ballon 125 d'eau. Ce ballon 125 d'eau, est, par exemple, un réservoir d'eau étanche. Ce ballon 125 d'eau comporte quatre ouvertures :
Une première ouverture correspond à une sortie 130 d'eau, connectée à l'entrée 115 du tube 110. Cette sortie 130 d'eau comporte une conduite 132 de transport de l'eau depuis l'ouverture du ballon 125 jusqu'à l'entrée 115 du tube 110. La conduite 132, dite « de descente froide », est connue de l'homme du métier sous le nom de « downcomer » (« descendant » en anglais). Cette conduite 132 n'entre pas dans le réacteur 105. Préférentiellement, cette première ouverture est positionnée sur une partie basse du ballon 125 lorsque ce ballon 125 est fixé en position. De cette manière, la gravité entraîne l'alimentation de la sortie 130 en eau sans nécessité d'un appareillage supplémentaire.

Une deuxième ouverture correspond à une entrée 135 d'eau et de vapeur connectée à la sortie 120 du tube 110. Cette entrée 135 comporte une conduite 137 de transport du fluide depuis la sortie 120 du tube 110 jusqu'à l'ouverture du ballon 125. Préférentiellement, cette deuxième ouverture est positionnée sur une partie haute du ballon 125 lorsque ce ballon 125 est fixé en position. De cette manière, l'eau et la vapeur franchissant l'ouverture sont séparées par l'effet de la gravité et si besoin à l'aide d'équipements classiques de séparation gaz - liquide tels que :
- des chicanes,
- des cyclones et/ou
- des dévésiculeurs.

Une troisième ouverture correspond à une sortie 140 de vapeur. Cette sortie 140 peut comporter une conduite de transport de la vapeur alimentant un dispositif externe ou une cheminée équipée d'une vanne 160 telle que décrite ci-après.

La vapeur produite par l'évaporation de l'eau dans chaque tube 110 permet la valorisation de la chaleur de la réaction exothermique, soit directement sous forme de chaleur, soit sous forme de matière, soit sous forme d'énergie au travers d'une turbine par exemple. De manière générale, un dispositif externe peut être relié à la sortie 140 pour vapeur d'eau du ballon 125.

Dans des modes de réalisation préférentiels, le dispositif 10 comporte un moyen 146 de mesure de niveau d'eau dans le ballon 125. Ce moyen de mesure 146 est, par exemple, une sonde de niveau externe reliée au ballon 125 par des piquages.

La vapeur quittant le dispositif est compensée par l'apport d'une quantité équivalente d'eau d'alimentation dans le ballon 125.

Une quatrième ouverture correspond à une entrée 145 d'alimentation en eau. Cette entrée 145 est reliée à une conduite d'alimentation en eau d'un réseau de distribution d'eau externe.

Le ballon 125 est positionné de telle manière que la surface de l'eau dans le ballon 125, lorsque l'eau dans ce ballon 125 est au point le plus bas, ce point le plus bas corresponde au point le plus haut d'un tube 110 dans le réacteur 105. De cette manière, grâce à la conduite 132 et quelle que soit la géométrie de la conduite 132 ou du ballon 125, la présence d'eau dans ce ballon 125 implique la présence d'eau dans au moins un tube 110.

Dans des variantes, le dispositif 10 comporte une pluralité de ballons 125 alimentés par et alimentant, chacun, un ou plusieurs tube 110.

Ainsi, comme on le comprend chaque tube 110 est alimenté en permanence par un fonctionnement en thermosiphon qui assure une circulation naturelle et auto-régulante de l'eau de refroidissement. Plus il y a de chaleur dans le réacteur 105 à évacuer, plus de bulles de vapeur sont formées, ce qui augmente le débit de circulation d'eau et de vapeur et donc le renouvellement de l'eau au contact de tubes 110 de refroidissement.

Le moyen 150 de mesure de la température dans le réacteur 105 catalytique est, par exemple, une sonde de température positionnée à l'intérieur du réacteur 105 dans la couche de catalyseur.

Dans des variantes, le dispositif 10 comporte une pluralité de moyens 150 de mesure.

Le moyen 155 de commande du ballon 125 d'eau est, par exemple, un circuit électronique de type microcontrôleur, configuré pour commander l'ouverture ou la fermeture de l'entrée 145 d'eau à un moyen de commande (non représenté) de l'entrée 145 d'eau en fonction d'un niveau mesuré par le moyen de mesure 146 de niveau d'eau dans le ballon 125.

Les régulateurs, 156 et 157, sont par exemple regroupés en un circuit électronique de type microcontrôleur pour commander l'ouverture ou la fermeture de la sortie 140 de vapeur d'eau par la vanne 160.

Dans des modes de réalisation, tels que celui représentés sur la figure 1, le dispositif 10 comporte :
- une vanne 160 de sortie de vapeur positionnée sur la sortie 140 de vapeur du ballon 125 et
- un système 158 de régulation de la pression à l'intérieur du ballon d'eau en fonction de la température du réacteur mesurée par le moyen de mesure de la température, ce système 158 de régulation étant configuré pour commander l'ouverture ou la fermeture de la vanne en fonction de la température mesurée par le moyen 150 de mesure de la température afin d'augmenter ou de réduire la pression dans le ballon.

Le système de régulation 158 de pression est formé par :
- un régulateur 156, tel que décrit ci-après,
- un régulateur 157, tel que décrit ci-après et
- la vanne 160.

Le système 158 de régulation est configuré pour commander l'ouverture ou la fermeture de la vanne 160 en fonction de la température mesurée par le moyen 150 de mesure de la température afin d'augmenter ou de réduire la pression dans le ballon 125. Ainsi, lorsque la pression dans le ballon 125 doit être réduite, la vanne 160 est ouverte de sorte que de la vapeur d'eau s'échappe du ballon 125.

Dans des modes de réalisation, tels que celui représentés sur la figure 1, le système 158 de régulation est configuré pour commander l'ouverture ou la fermeture de la vanne 160 en fonction d'une différence entre la température captée et une valeur limite déterminée. Dans ces modes de réalisation la pression à l'intérieur du circuit formé par le ballon 125 et les tubes 110 est régulée pour que la température à l'intérieur du réacteur 105 augmente ou diminue pour atteindre la valeur limite déterminée.

Dans des modes de réalisation, tels que celui représentés sur la figure 1, le dispositif 10 comporte un capteur 165 de pression à l'intérieur du dispositif de refroidissement. Ce capteur 165 de pression est, par exemple, une sonde de pression positionnée à l'intérieur du circuit formé par le ballon 125 et les tubes 110. Le système 158 de régulation est configuré pour commander l'ouverture ou la fermeture de la vanne 160 en fonction de la température et de la pression captées.

Dans des modes de réalisation, tels que celui représentés sur la figure 1, au moins un des tubes 110 est rectiligne et traverse le réacteur 105 verticalement, chaque tube 110 rectiligne étant configuré pour que l'eau circulant dans ledit tube 110 soit partiellement vaporisée lors du passage dans le réacteur 105 catalytique.

Par « partiellement vaporisée », on entend un ordre de grandeur de l'ordre de cinq pourcents d'eau vaporisée en sortie de chaque tube 110.

Dans des modes de réalisation, tels que celui représentés sur la figure 1, le dispositif 10 comporte un distributeur 170 d'eau relié à chaque tube 110. Ce distributeur 170 est, par exemple, une conduite creuse dont une ouverture est positionnée en dehors du réacteur 105 et, pour chaque tube 110, une ouverture est positionnée à l'intérieur du réacteur 105, la cavité de la conduite reliant l'ouverture extérieure et chaque ouverture intérieure.

Dans des modes de réalisation, tels que celui représentés sur la figure 1, le dispositif 10 comporte un collecteur 175 de vapeur relié à chaque tube 110. Ce collecteur 175 est, par exemple, une conduite creuse dont une ouverture est positionnée en dehors du réacteur 105 et, pour chaque tube 110, une ouverture est positionnée à l'intérieur du réacteur 105, la cavité de la conduite reliant l'ouverture extérieure et chaque ouverture intérieure.

Préférentiellement, seul le distributeur 170 et/ou le collecteur 175 sont des conduits non proches de la verticalité, par opposition aux tubes 110 et, le cas échéant, à la conduite 132 qui sont préférentiellement verticaux.

Dans des modes de réalisation, tels que celui représentés sur la figure 1, au moins un tube 110 est positionné à proximité d'une paroi 185 intérieure du réacteur 105.

Dans l'invention, telle que représentée sur la figure 2, au moins une paroi 215 du réacteur 205 est formée par au moins un tube 210.

Dans des modes de réalisation, tels que celui représentés sur la figure 1, au moins un tube 110 comporte des ailettes 190. Extérieurement, au moins un tube 110 de refroidissement peut être muni d'ailettes sur tout ou partie de la longueur du tube 110 afin d'augmenter la surface de contact avec le catalyseur et les gaz. De plus, au moins un tube 110 de refroidissement peut être rainuré intérieurement.

On observe, sur la figure 2, schématiquement, en coupe et vue de dessus, un mode de réalisation particulier d'un réacteur 205 muni de tubes 210 d'un dispositif de refroidissement objet de la présente invention. Dans ce mode de réalisation, les tubes 210 sont intégrés à la paroi 215 du réacteur 205 et en forment tout ou partie.

On observe sur la figure 3, schématiquement, en coupe et vue de côté, un mode de réalisation particulier d'un réacteur 305 muni de tubes 310 d'un dispositif de refroidissement objet de la présente invention. Ce réacteur 305 correspond à un réacteur 305 à lit catalytique fluidisé.

Ainsi, comme on le comprend à la lecture de la présente description, le dispositif de refroidissement fonctionne par un mécanisme de thermosiphon. Ce thermosiphon comporte :
- un ballon 125,
- une conduite de descente froide 132,
- un distributeur 170 si le dispositif 10 comporte un tel distributeur 170,
- chaque tube 110 ou 310 et
- un collecteur 175 si le dispositif 10 comporte un tel collecteur 175.

Le thermosiphon fonctionne de la façon suivante: le ballon 125 est partiellement rempli d'eau de sorte que chaque conduite 132 de descente froide soit en permanence entièrement remplie d'eau, ainsi que le distributeur 170 d'eau ; cet ensemble constitue une colonne d'eau permanente. Chaque tube, 110 ou 310, de refroidissement initialement partiellement ou intégralement rempli en eau est chauffé par la chaleur de la réaction ayant lieu dans le réacteur 105. Une partie de l'eau contenue dans chaque tube, 110 ou 310, est évaporée en formant des bulles de vapeur. Le mélange obtenu présente une densité plus faible que l'eau présente dans le ballon et les conduites de descente froide. En conséquence, un déséquilibre de masse est créé et le mélange eau-vapeur est poussé par l'eau venant du ballon 125. Le mélange eau-vapeur remonte par le collecteur 175 jusqu'au ballon 125. Ce mélange est séparé en deux phases : la phase liquide est stockée dans le fond du ballon 125 et retourne vers chaque tube, 110 ou 310, de refroidissement et la phase gazeuse est évacuée en fonction de la pression à maintenir dans le système de refroidissement.

Compte tenu des échanges thermiques, entre l'eau dans chaque tube, 110 ou 310, d'une part et le lit catalytique à lit fixe ou à lit fluidisé et les gaz d'autres part, ce dispositif 10 peut réguler la température dans le réacteur, 105 ou 305, à lit fluidisé ou à lit fixe en régulant la pression du ballon 125. Cette régulation impose une température de changement de phase de l'eau précise et qui varie très peu entre le bas et le haut de chaque tube, 110 ou 310, préférentiellement vertical. Pour effectuer cette régulation, une ou plusieurs mesures de température sont effectuées dans le réacteur, 105 ou 305, catalytique. Cette mesure de température est utilisée par un régulateur 157, tel un moyen de commande, qui compare la température mesurée avec la valeur limite déterminée de consigne. Le régulateur 157 envoie un signal de sortie vers un second régulateur 156, tel un moyen de commande, qui compare le signal du premier régulateur avec la mesure de pression du thermosiphon. En fonction de l'écart de pression le deuxième régulateur agit sur la vanne 160 de sortie de vapeur pour modifier la pression de fonctionnement de l'ensemble du dispositif 10 de refroidissement, pour obtenir la température souhaitée dans le réacteur,105 ou 305, catalytique, qu'il soit à lit fixe ou à lit fluidisé.

Le changement de phase liquide-gaz est un phénomène opérant à une température fixe pour une pression donnée. En conséquence, la température est uniforme tout le long de chaque tube, 110 ou 310, servant à l'échange thermique. Cette propriété est mise à profit pour imposer une température fixe dans le réacteur, 105 ou 305, catalytique qui permet une meilleure conversion pour les réactions chimiques qui s'y produisent. De plus, cette température dans le réacteur, 105 ou 305, est réglable en modifiant la pression de fonctionnement du dispositif 10 de refroidissement, ce qui modifie de facto la température du changement de phase liquide-gaz.

Le dispositif, 10 ou 30, peut être décliné en deux configurations :
Le réacteur, 105 ou 305, catalytique peut fonctionner à une pression proche de la pression atmosphérique. À cet égard, les parois latérales du réacteur, 105 ou 305, sont constituées par tout ou partie de tubes, 110 ou 310, de refroidissements verticaux. Ladite partie comprend au moins un tube, 110 ou 310.

Dans ce cas de figure la configuration consiste à joindre chaque tube, 110 ou 310, formant la paroi du réacteur, 105 ou 305, par des fers plats, appelés « ailettes ». D'autres tubes, 110 ou 310, verticaux peuvent être utilisés à l'intérieur du réacteur 105 afin de présenter la surface d'échange et le refroidissement nécessaire au fonctionnement de la réaction. L'avantage de cette configuration est qu'il n'y a pas d'écart de température entre les parois du réacteur, 105 ou 305, et d'autres tubes, 110 ou 310,de refroidissement placés à l'intérieur du réacteur, 105 ou 305.

Si le réacteur, 105 ou 305, catalytique fonctionne à une pression éloignée de la pression atmosphérique, il est préférable de réaliser le réacteur, 105 ou 305, selon les règles de l'art des équipements sous pression et d'insérer les tubes, 110 ou 310, du dispositif 10 de refroidissement à tubes verticaux dans le réacteur, 105 ou 305.

Les configurations proposées offrent les avantages suivants :
- puisque c'est le changement de phase qui absorbe la chaleur, le fluide de refroidissement présente une température constante pour une pression donnée, ce qui permet d'être isotherme,
- l'essentiel de la surface d'échange est préférentiellement verticale, ce qui empêche l'accumulation de vapeur dans chaque tube, 110 ou 310, et donc les phénomènes de stratification entre l'eau et la vapeur,
- le principe de circulation naturelle, par le mécanisme de thermosiphon, mis en œuvre par le dispositif, 10 ou 30, permet de ne pas nécessairement utiliser de pompe de circulation,
- peut être appliquée sur les réacteurs, 105 ou 305, à lit fixe et à lit fluidisé et
- permet de maintenir une température minimale dans le réacteur 105 ce qui favorise la cinétique de réaction et empêche la formation de composés toxiques tels que les carbonyles.

## Revendications

1. Réacteur (105, 205) catalytique de méthanation de dioxyde de carbone qui comporte un dispositif de refroidissement, le dispositif de refroidissement étant **caractérisé en ce qu'**il comporte :
- au moins une paroi (185, 215) latérale du réacteur (105, 205) formée par au moins un tube de refroidissement (110, 210),
- au moins un tube (110, 210) de refroidissement traversant le réacteur comportant :
- une entrée (115) et
- une sortie (120) positionnée à une altitude plus élevée que l'entrée,
- un ballon (125) d'eau alimentant le tube par gravité, comportant :
- une sortie (130) d'eau, connectée à l'entrée du tube ;
- une entrée (135) d'eau et de vapeur connectée à la sortie du tube ;
- une sortie (140) de vapeur et
- une entrée (145) d'alimentation en eau,
- un moyen (150) de mesure de la température dans le réacteur catalytique,
- un moyen (155) de commande d'un niveau d'eau dans le ballon d'eau configuré pour alimenter le ballon d'eau en eau pour maintenir un niveau d'eau prédéterminé dans le ballon,
- une vanne (160) de sortie de vapeur positionnée sur la sortie (140) de vapeur du ballon (125) et
- un système (158) de régulation de la pression à l'intérieur du ballon d'eau en fonction de la température du réacteur mesurée par le moyen de mesure de la température, ce système (158) de régulation étant configuré pour commander l'ouverture ou la fermeture de la vanne en fonction de la température mesurée par le moyen (150) de mesure de la température afin d'augmenter ou de réduire la pression dans le ballon.

2. Réacteur (105, 205) selon la revendication 1, dans lequel le système (158) de régulation est configuré pour commander l'ouverture ou la fermeture de la vanne (160) en fonction d'une différence entre la température captée et une valeur limite déterminée.

3. Réacteur (105, 205) selon l'une des revendications 1 ou 2, qui comporte un capteur (165) de pression à l'intérieur du dispositif de refroidissement, le système (158) de régulation étant configuré pour commander l'ouverture ou la fermeture de la vanne (160) en fonction de la température et de la pression captées.

4. Réacteur (105, 205) selon l'une des revendications 1 à 3, dans lequel au moins un des tubes (110, 210) est rectiligne et traverse le réacteur (105, 205) verticalement, chaque tube rectiligne étant configuré pour que l'eau circulant dans ledit tube soit partiellement vaporisée lors du passage dans le réacteur catalytique.

5. Réacteur (105, 205) selon l'une des revendications 1 à 4, qui comporte un distributeur (170) d'eau relié à chaque tube (110, 210).

6. Réacteur (105, 205) selon l'une des revendications 1 à 5, qui comporte un collecteur (175) de vapeur relié à chaque tube (110, 210).

7. Réacteur (105, 205) selon l'une des revendications 1 à 6, dans lequel au moins un tube (110, 210) comporte des ailettes (190).

## Patentansprüche

1. Katalytischer Kohlenstoffdioxid-Methanisierungsreaktor (105, 205), der eine Kühlvorrichtung umfasst, wobei die genannte Kühlvorrichtung **dadurch gekennzeichnet ist, dass** sie umfasst:
- wenigstens eine seitliche Wand (185, 215) des Reaktors (105, 205), die von wenigstens einer Kühlröhre (110, 201) gebildet ist,
- wobei wenigstens eine Kühlröhre (110, 210) den Reaktor durchquert, umfassend:
- einen Eingang (115) und
- einen Ausgang (120), der in einer höheren Höhe als der Eingang positioniert ist,
- einen Wasserspeicher (125), der die Röhre per Schwerkraft versorgt, umfassend:
- einen Wasserausgang (130), der an den Eingang der Röhre angeschlossen ist;
- einen Wasser- und Dampfeingang (135), der an den Ausgang der Röhre angeschlossen ist;
- einen Dampfausgang (140) und
- einen Wasserversorgungseingang (145),
- ein Messmittel (150) der Temperatur im katalytischen Reaktor,
- ein Steuermittel (155) eines Wasserstandes im Wasserspeicher, das zum Versorgen des Wasserspeichers mit Wasser ausgestaltet ist, um im Wasserspeicher einen vorbestimmten Wasserstand zu halten,
- ein Dampfausgangsventil (160), das am Dampfausgang (140) des Speichers (125) positioniert ist, und
- ein Regulierungssystem (158) des Drucks im Innern des Wasserspeichers in Abhängigkeit von der Temperatur des Reaktors, die von dem Messmittel der Temperatur gemessen ist, wobei dieses Regulierungssystem (158) zum Steuern des Öffnens oder des Schließens des Ventils in Abhängigkeit von der Temperatur ausgestaltet ist, die von dem Messmittel (150) der Temperatur gemessen ist, um den Druck im Speicher zu erhöhen oder zu senken.

2. Reaktor (105, 205) gemäß Anspruch 1, bei dem das Regulierungssystem (158) ausgestaltet ist, um das Öffnen oder das Schließen des Ventils (160) in Abhängigkeit von einem Unterschied zwischen der erfassten Temperatur und einem bestimmten begrenzten Wert zu steuern.

3. Reaktor (105, 205) gemäß einem der Ansprüche 1 oder 2, der einen Drucksensor (165) im Innern der Kühlvorrichtung umfasst, wobei das Regulierungssystem (158) zum Steuern des Öffnens oder des Schließens des Ventils (160) in Abhängigkeit von der erfassten Temperatur und dem erfassten Druck ausgestaltet ist.

4. Reaktor (105, 205) gemäß einem der Ansprüche 1 bis 3, bei dem wenigstens eine der Röhren (110, 201) rechteckig ist und den Reaktor (105, 205) vertikal durchquert, wobei jede rechteckige Röhre ausgestaltet ist, damit das Wasser, das in der genannten Röhre umläuft, beim Durchgang in dem katalytischen Reaktor teilweise verdampft wird.

5. Reaktor (105, 205) gemäß einem der Ansprüche 1 bis 4, der einen Wasserverteiler (170) umfasst, der mit jeder Röhre (110, 210) verbunden ist.

6. Reaktor (105, 205) gemäß einem der Ansprüche 1 bis 5, der einen Dampfabscheider (175) umfasst, der mit jeder Röhre (110, 210) verbunden ist.

7. Reaktor (105, 205) gemäß einem der Ansprüche 1 bis 6, bei dem wenigstens eine Röhre (110, 210) Rohrrippen (190) umfasst.

## Claims

1. Carbon dioxide methanation catalytic reactor (105) comprising a cooling device (10), the cooling device being **characterized in that** it comprises:
- at least lateral wall (185) of the reactor (105) being formed by at least one cooling tube (110),
- at least one cooling tube (110) passing through the reactor comprising:
- an inlet (115); and
- an outlet (120) positioned at an altitude higher than the inlet;
- a water tank (125) supplying the tube by gravity, comprising:
- a water outlet (130), connected to the inlet of the tube;
- a water and steam inlet (135) connected to the outlet of the tube;
- a steam outlet (140); and
- a water supply inlet (145);
- a means (150) for measuring the temperature in the catalytic reactor;
- a means (155) for controlling a water level in the water tank, configured to supply the water tank with water in order to maintain a predefined water level in the tank;
- a steam outlet valve (160) positioned on the outlet (140) for steam from the tank (125); and
- a system (158) for regulating the pressure inside the water tank as a function of the reactor temperature measured by the temperature measurement means, this regulation system (158) being configured to control the opening or closing of the valve as a function of the reactor temperature measured by the temperature measurement means (150) in order to increase or reduce the pressure in the tank.

2. Reactor (105) according to claim 1, wherein the regulation system (158) is configured to control the opening or closing of the valve (160) as a function of a difference between the temperature captured and a predefined limit value.

3. Reactor (105) according to one of claims 1 or 2, which comprises a pressure sensor (165) inside the cooling device, the regulation system (158) being configured to control the opening or closing of the valve (160) as a function of the temperature and the pressure captured.

4. Reactor (105) according to one of claims 1 to 3, wherein at least one of the tubes (110) is rectilinear and passes through the reactor (105) vertically, each rectilinear tube being configured such that the water circulating in said tube is partially vaporized during the passage in the catalytic reactor.

5. Reactor (105) according to one of claims 1 to 4, which comprises a water distributer (170) connected to each tube (110).

6. Reactor (105) according to one of claims 1 to 5, which comprises a steam collector (175) connected to each tube (110).

7. Reactor (105) according to one of claims 1 to 6, wherein at least one tube (110) comprises fins (190).
